# EUROPEAN PATENT APPLICATION

(11) **EP 4 745 953 A1**
(43) Date of publication of application: **20.05.2026**
(21) Application number: 25204067.0
(22) Date of filing: 23.09.2025
(51) Int. Cl.: G10H 1/00

(54) **METHOD AND SYSTEM FOR CREATING AN INTEGRATED PLATFORM FOR SET-LIST AND LOOP GENERATION**

(30) Priority: 15.11.2024 IN 202421088529
(71) Applicant: Tata Consultancy Services Limited, Mumbai, Maharashtra 400 021 (IN)
(72) Inventor: CHAUDHURI, Subhrojyoti Roy, 411028 Pune, Maharashtra (IN); NAGULPELLI, Aditya, 411041 Pune, Maharashtra (IN); PATIL, Aditya Annaso, 416415 Sangli, Maharashtra (IN); RAGHUVANSHI, Aditya, 500032 Hyderabad, Telangana (IN)
(74) Representative: Goddar, Heinz J.

(57) **Abstract**

Preparing for live music performances such as curating and sequencing list of tracks and remixing them with musical loops can be challenging. The present disclosure predicts a first set of features relevant to an event. One or more music tracks are generated using at least a subset of the predicted first set of features. The one or more music tracks are split into one or more individual arrangement tracks. One or more segments are generated by identifying one or more repetitive patterns for each of the one or more individual arrangement tracks. A second set of features are extracted from each of the one or more segments. One or more loops are generated based on at least a subset of extracted second set of features. The one or more loops are provided for one or more loop sequencers for usage in the event.

## Description

### CROSS-REFERENCE TO RELATED APPLICATIONS AND PRIORITY

The present application claims priority from Indian application no. 202421088529, filed on November 15, 2024.

### TECHNICAL FIELD

The disclosure herein generally relates to editing and generating audio content, and, more particularly, to a method and system for creating an integrated platform for set-list and loop generation.

### BACKGROUND

A live music performer, more so a solo artist such as an instrument player, a singer, or a Disk Jockey (DJ), often needs to put in substantial work to prepare for their musical performances. Apart from honing specific artistic skills, the preparation includes the key task of a set-list creation that requires an understanding of the audience at the performance venue in terms of their musical tastes and curating music to their taste to ensure their attention and engagement during the musical performance.

Advancements in software technologies enable artists, especially solo artists, to augment their performance set-list with additional sound elements. A recent trend is for the artists to create a repository of sounds, commonly referred to as loops to compliment their set-lists. These loops can be triggered by the artists at different points of their performance to generate additional harmonic melodies or rhythmic patterns to enhance the appeal of their performance.

Currently, several software applications assist in the creation of these loops using manual or semi-automated processes. However, most of the existing software tools are dependent on the artistry of the individual artists for their usage to create loops that effectively complement their set-lists.

With the advent of GenAI (Generative Artificial Intelligence), there is a significant opportunity to facilitate the manual process of creating musical set-lists with loops thereby enabling the artist to incorporate a rich ensemble of sounds in their musical performances. Although there exist several GenAI tools for musicians they are not well integrated into the workflow of an artist so that they can take their benefit towards their set-list preparation and execution of musical performances.

### SUMMARY

Embodiments of the present disclosure present technological improvements as solutions to one or more of the above-mentioned technical problems recognized by the inventors in conventional systems. For example, in one embodiment, a method for creating an integrated platform for set-list and loop generation is provided. The method includes receiving, via one or more hardware processors, one or more inputs from a user specific to an event; predicting, via the one or more hardware processors, a first set of features relevant to the event using one or more machine learning techniques, wherein the first set of features comprise a plurality of personas pertaining to the user; generating, via the one or more hardware processors, using at least a subset of the predicted first set of features, one or more music tracks matching the predicted first set of features; performing, via the one or more hardware processors, based on the generated one or more music tracks: splitting the one or more music tracks into one or more individual arrangement tracks using an Artificial Intelligence (AI) tool; identifying one or more repetitive patterns for each of the one or more individual arrangement tracks; generating one or more segments using the identified one or more repetitive patterns for each of the one or more individual arrangement tracks, based on a comparison of time length of the identified one or more repetitive patterns and a predefined threshold time; and extracting a second set of features from each of the generated one or more segments; generating, via the one or more hardware processors, one or more loops based on at least a subset of the extracted second set of features for each of the generated one or more segments; and providing, via the one or more hardware processors, the generated one or more loops for one or more loop sequencers for usage in the event.

In another aspect, there is provided a system for creating an integrated platform for set-list and loop generation. The system comprises: a memory storing instructions; one or more communication interfaces; and one or more hardware processors coupled to the memory via the one or more communication interfaces, wherein the one or more hardware processors are configured by the instructions to: receive one or more inputs from a user specific to an event. The system further includes predicting a first set of features relevant to the event using one or more machine learning techniques, wherein the first set of features comprise a plurality of personas pertaining to the user; generating using at least a subset of the predicted first set of features, one or more music tracks matching the predicted first set of features; performing based on the generated one or more music tracks: splitting the one or more music tracks into one or more individual arrangement tracks using an Artificial Intelligence (AI) tool; identifying one or more repetitive patterns for each of the one or more individual arrangement tracks; generating one or more segments using the identified one or more repetitive patterns for each of the one or more individual arrangement tracks, based on a comparison of time length of the identified one or more repetitive patterns and a predefined threshold time; and extracting a second set of features from each of the generated one or more segments; generating one or more loops based on at least a subset of the extracted second set of features for each of the generated one or more segments; and providing the generated one or more loops for one or more loop sequencers for usage in the event.

In yet another aspect, there are provided one or more non-transitory machine-readable information storage mediums comprising one or more instructions which when executed by one or more hardware processors cause receiving one or more inputs from a user specific to an event; predicting a first set of features relevant to the event using one or more machine learning techniques, wherein the first set of features comprise a plurality of personas pertaining to the user; generating using at least a subset of the predicted first set of features, one or more music tracks matching the predicted first set of features; performing based on the generated one or more music tracks: splitting the one or more music tracks into one or more individual arrangement tracks using an Artificial Intelligence (AI) tool; identifying one or more repetitive patterns for each of the one or more individual arrangement tracks; generating one or more segments using the identified one or more repetitive patterns for each of the one or more individual arrangement tracks, based on a comparison of time length of the identified one or more repetitive patterns and a predefined threshold time; and extracting a second set of features from each of the generated one or more segments; generating one or more loops based on at least a subset of the extracted second set of features for each of the generated one or more segments; and providing the generated one or more loops for one or more loop sequencers for usage in the event.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for creating an integrated platform for set-list and loop generation, according to some embodiments of the present disclosure.
FIG. 2 is a functional block diagram of the system for creating an integrated platform for set-list and loop generation, according to some embodiments of the present disclosure.
FIGS. 3A through 3C are flow diagrams illustrating the steps involved in the method for creating an integrated platform for set-list and loop generation, according to some embodiments of the present disclosure.
FIG. 4 shows a pictorial view of the working of the proposed system, according to some embodiments of the present disclosure.
FIG. 5 shows an implementation of architecture in conjunction with the method for creating an integrated platform for set-list and loop generation, according to some embodiments of the present disclosure.
FIG. 6 shows various sound processing steps for loop generation in conjunction with the method for creating an integrated platform for set-list and loop generation, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

An artistic act does not have fixed rules and is dependent on the intuitive skills of the artist. An individual artist decides what music to perform at a specific venue. One of the important skills is the ability of the artist to read the crowd's behavior and energy levels and use that as feedback to sequence tracks as well as their timing to keep the audience engaged positively during the performance. Although music recommendation systems have been researched and have evolved extensively, there are only a few instances of their actual usage in the context of live music performances. Several software technologies significantly aid a Disk Jockey (DJ)'s performance in the current practice. The software technologies mostly reflect the functionality of the traditional hardware technologies which define the art of DJ-ing. Turntables and mixer interfaces to manipulate control parameters such as continuous variable playback speed, sound level, filtering, and crossfader for mixing the two sound sources are the key features of a DJ-ing toolkit. These are seen both in hardware and DJ-ing software.

Loop sequencing software is used widely by both DJs (Disk Jockeys) and artists to augment their performances. Loop sequencers are tools known to be used by non-musicians to compose music as they do not require expert musical knowledge. Nonetheless, their usage is still not easy in a live musical context. The selection of appropriate loops to complement the performed music, both in terms of musical features (such as tempo and key) and aesthetics, can be difficult. A loop sequencer with a large collection of loops makes the loop selection process even more difficult for artists. It makes them spend a significant amount of time figuring out the appropriate loops for their performances.

The present disclosure addresses the issues by creating an integrated platform for set-list and loop generation. The present disclosure predicts a first set of features relevant to an event using one or more machine learning techniques. The one or more machine learning techniques includes one or more Large Language Models (LLMs) and one or more Deep Learning techniques. Further the present disclosure generates one or more music tracks matching the predicted first set of features by using at least a subset of the predicted first set of features. Furthermore, the present disclosure performs following steps based on the generated one or more music tracks. The one or more music tracks are split into one or more individual arrangement tracks using an AI (Artificial Intelligence) tool. One or more repetitive patterns are identified for each of the one or more individual arrangement tracks. One or more segments are generated using the identified one or more repetitive patterns for each of the one or more individual arrangement tracks, based on a comparison of time length of the identified one or more patterns and a predefined threshold time. A second set of features are extracted from each of the generated one or more segments. Further, the present disclosure generates one or more loops based on the at least a subset of the extracted second set of features for each of the generated one or more segments. Finally, the generated one or more loops are provided for one or more loop sequencers for usage in the event.

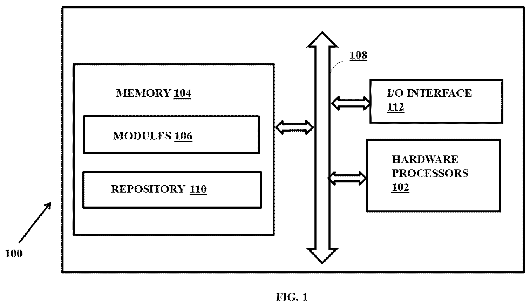

Referring now to the drawings, and more particularly to FIG. 1 through FIG. 6, where similar reference characters denote corresponding features consistently throughout the figures, there are shown preferred embodiments, and these embodiments are described in the context of the following exemplary system and/or method.

FIG. 1 illustrates an exemplary system for creating an integrated platform for set-list and loop generation, according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

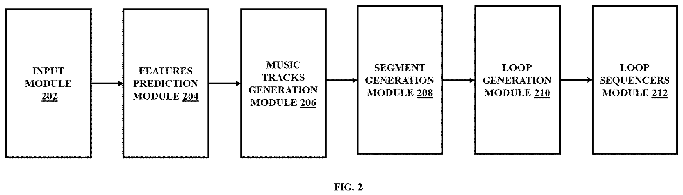

The plurality of modules 106 includes programs or coded instructions that supplement applications or functions performed by the system 100 for creating an integrated platform for set-list and loop generation. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for creating an integrated platform for set-list and loop generation. In an embodiment, the modules 106 include an input module 202, a features prediction module 204, a music tracks generation module 206, a segment generation module 208, a loop generation module 210 and a loop sequencers module 212. The modules are depicted in FIG. 2. These modules that are depicted in FIG. 2 are implemented as at least one of a logically self-contained part of a software program, a self-contained hardware component, and/or a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented external to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

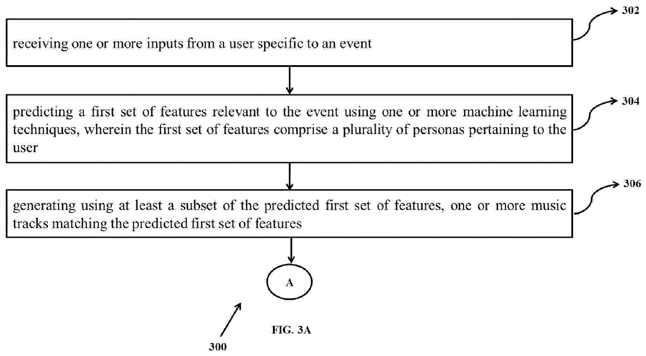

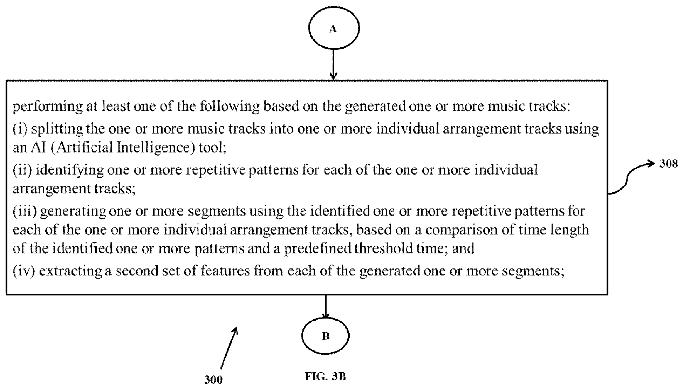

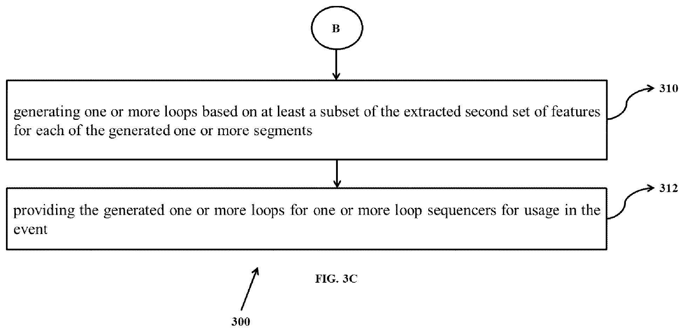

FIGS. 3A through 3C are flow diagrams illustrating a method for creating an integrated platform for set-list and loop generation using the systems 100 of FIGS. 1-2, according to some embodiments of the present disclosure. Steps of the method of FIGS. 3A through 3C shall be described in conjunction with the components of FIG. 2. At step 302 of the method 300, the input module 202 executed via the one or more hardware processors 102 receives one or more inputs from a user specific to an event. The event can be any event where a musical performance is sought. The one or more inputs comprise at least one of a location of the event and an occasion of the event.

The objective of the system 100 is to assist an artist's set-list preparation tasks primarily related to music selection and generation of associated sound loops. The system 100 identifies the essential preparatory tasks and streamlines their execution in a meaningful order. Some of these tasks are typically carried out arbitrarily in the current practice. The present disclosure posits that the identification and ordering of such tasks will help using appropriate AI (Artificial Intelligence) capabilities that could significantly assist artists in their performance preparations. The present disclosure implements an intelligent, configurable, and reusable workflow, referred to as Intelligent Workflow (IW) in the present disclosure, to serve as the solution implemented by integrating AI capabilities. The Intelligent Workflow (IW) provides the one or more inputs from an artist to execute a set of pre-identified tasks assisted by AI (Artificial Intelligence) tools, towards set-list preparation. The tasks are described below.

The first task is for the artist to provide basic inputs about the performance, e.g., the occasion of the event, city, and country for set-list preparation assistance.

At step 304 of the method 300, the features prediction module 204 executed via the one or more hardware processors 102 predicts a first set of features relevant to the event using one or more machine learning techniques. The first set of features comprise a plurality of personas pertaining to the user. The first set of features comprise at least one of one or more age groups, a cultural background, a dress code, and an expected energy level at the event. Based on the input, the system 100 predicts and presents detailed features of relevance for the event such as personas in the audience, their age groups, cultural background, expected event energy levels, e.g., calm or energized, etc. Herein the present disclosure, the terms "user" and the "artist" can be interchangeably used.

At step 306 of the method 300, the music tracks generation module 206 executed via the one or more hardware processors 102 generates using at least a subset of the predicted first set of features, one or more music tracks matching the predicted first set of features. The artist can use features from the presented list to query the system 100 for music genres and tracks that could match the performance occasion. The system 100 generates a list of possible genres and tracks corresponding to the specified features. Further, the artist selects tracks from the suggested list of music to add to the performance set-list, as well as further generate their logical sequencing within the set-list using the system 100.

At step 308 of the method 300, the segment generation module 208 executed via the one or more hardware processors 102 performs following steps based on the generated one or more music tracks. The one or more music tracks are split into one or more individual arrangement tracks using an AI (Artificial Intelligence) tool. Examples of the AI (Artificial Intelligence) tool include Splitter AI (known in the art), Vidnoz AI (known in the art) and the like. In the present disclosure, Splitter AI tool is used for splitting the one or more music tracks. One or more repetitive patterns are identified for each of the one or more individual arrangement tracks. One or more segments are generated using the identified one or more repetitive patterns for each of the one or more individual arrangement tracks, based on a comparison of time length of the identified one or more repetitive patterns and a predefined threshold time. The predefined threshold time is equal to 15 seconds in the present disclosure. This threshold is not hard-coded and can be re-configured. A second set of features are extracted from each of the generated one or more segments. The second set of features can be a mood, an attitude, a movement, presence of beat, a tempo, a genre, a key, beats per minute (bpm) and the like). The one or more individual arrangement tracks comprise at least one of one or more individual instrument tracks and one or more individual vocal tracks.

For each arrangement track, the system 100 identifies repetitive one or more patterns and generates the one or more segments, if the identified one or more repetitive patterns are longer than the predefined threshold time. Further the system 100 presents the one or more segments for each arrangement track to the artist to decide whether to generate corresponding one or more loops in line with the sounds of those one or more segments. For each segment, the Intelligent Workflow (IW) extract features as tags and presents them to the artist to specify loop generation if the segments are of interest to the artist.

The existing datasets including MagnaTagATune (MTAT) (known in art), million song dataset (msd) (known in art), jamendo (known in art) have only mood, genre and instruments as tags are limited to a total of 50. These tags are not very useful as they are extremely high level and not reliable. An existing website named Bridge.audio website stores music files and along with other features, generates tags for them, wherein the other features include genre, a subgenre, mood, vocal dynamics, an image and the like. The Bridge.audio website has developed selenium script to automatically upload selected segment on the website and extracts tags generated by the website into a comprehensive tags.json (JavaScript Object Notation) file with beats per minute (bpm) and key extracted using librosa library. This tags.json file is then passed for further analysis.

For each track, the artist further requests the Intelligent Workflow (IW) for the loop generation. Based on the tracks selected for loop generation, the Intelligent Workflow (IW) performs the following:
The system 100 splits the music track into individual arrangement tracks, such as individual instrument or vocal tracks e.g., drum, bass guitar, guitar, vocals, and other instrumental tracks. The artist identifies the segments of interest for loop generation by selecting and specifying the corresponding features.

At step 310 of the method 300, the loop generation module 210 executed via the one or more hardware processors 102 generate one or more loops based on at least a subset of the extracted second set of features for each of the generated one or more segments.

At step 312 of the method 300, the loop sequencers module 212 executed via the one or more hardware processors 102 provide the generated one or more loops for one or more loop sequencers for usage in the event. The Intelligent Workflow (IW) generates three loops per selected segment by default. It is to be noted by a person having ordinary skill in the art of person skilled in the art that the example of three loops per segment shall not be construed as limiting the scope of the present disclosure. The number of loops to be generated can be configured. The loops are played back on demand for the artist to decide whether to use them or regenerate them again. The user finally selects and saves the loops that they can upload onto loop sequencing software for usage during live performances.

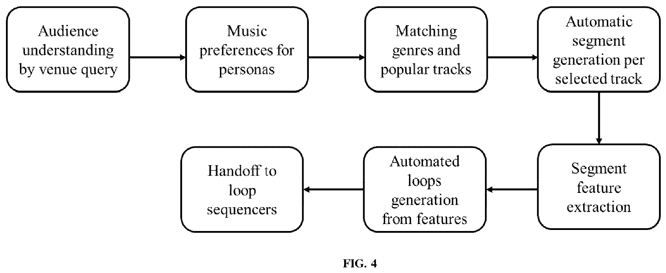

FIG. 4 shows a pictorial view of the working of the system 100 of FIG. 1, according to some embodiments of the present disclosure.

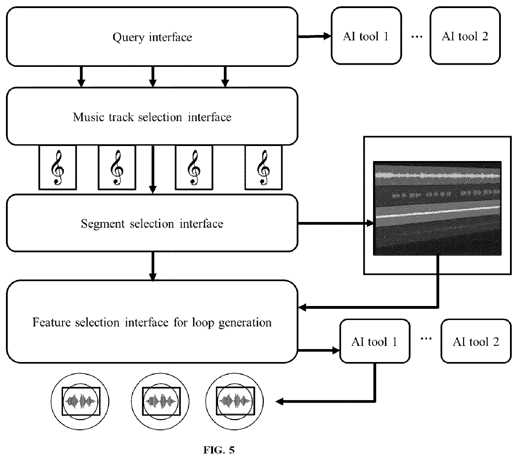

FIG. 5 shows an implementation of architecture in conjunction with the method for creating an integrated platform for set-list and loop generation, according to some embodiments of the present disclosure. The system's architecture of the Intelligent Workflow (IW) is depicted in FIG. 5. The Intelligent Workflow (IW) implementation comprises two modules: (a) an Application Programming Interface (API) interface module to integrate existing off-the-shelf AI (Artificial Intelligence) tools into the Intelligent Workflow (IW) to assist and execute the tasks outlined in the previous sections. The Application Programming Interface (API) interface module also enables users to specify inputs and queries to execute one or more tasks, and (b) a selection and processing interface module for making selections of the suggested soundtracks and their features to achieve the artist's goal of creating loops. The Application Programming Interface (API) interface module and the selection and processing module are described in the subsections below. The focus of the method of the present disclosure is to integrate existing available AI (Artificial Intelligence) tools so that they meaningfully contribute to an artist's workflow to prepare set-lists for live performances rather than inventing a new AI tool to generate music. There are many existing AI tools that are available off the shelf. However, it is often quite difficult to coordinate multiple AI tools to prepare a performance set-list and generate associated loops. The API interface module implements the necessary API interfaces for integrating AI tools in the workflow to ease set-list creation and loop generation. The API interface module incorporates a knowledge base of existing AI tools, useful for implementing individual tasks of IW. This knowledge is codified using a capability description model which captures how the AI tool can assist a task. A simple example of the capability description model is shown in the listing below. The capability description model is a meta model like that of a data structure.

```
AI Tool {
             Name
             }
             Input {
                    Age:
                    Location :
             {
                    Genre
             Track []
```

To illustrate with an example, in the present disclosure, an AI tool named ChatMusician (known in the art) is used which is trained on a vast dataset of musical preferences and trends, based on which it can predict the genres of music that the audience will likely enjoy. Hence, ChatMusician is integrated in the Intelligent Workflow (IW) using a corresponding capability description in line with the example above. This enables the Intelligent Workflow (IW) to execute the task of generating audience understanding and their musical tastes based on basic inputs provided by the artist. The capability description model helps to create a uniform interface for the artists to specify inputs for invoking different AI tools that implement the tasks that are outlined and described above. Using the capability knowledge model, the Intelligent Workflow (IW) invokes an underlying AI tool passing the user input to generate the desired outputs, which are (i) feature tags and (ii) sound files. These outputs enable the artist to make further specifications for the loop generation.

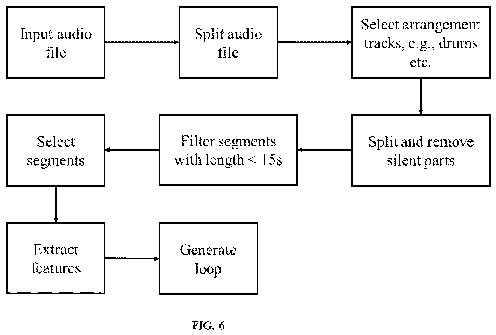

FIG. 6 shows various sound processing steps for loop generation in conjunction with the method for creating an integrated platform for set-list and loop generation, according to some embodiments of the present disclosure. The sound selection and processing module lets the artist review and select specific soundtracks for generating the corresponding loops. Once suggested with a possible set of tracks for performance, the artist either can go ahead with the suggested tracks for loop generation or filter some of them that are not up to their liking.

Based on the selected tracks, the Intelligent Workflow (IW) invokes an appropriate underlying AI tool to split the track into its arrangement tracks. An arrangement track may correspond to an instrument such as drums, guitar, or any other instrument or vocal track. As part of the Intelligent Workflow (IW) approach and outcome, the present disclosure implements a computing process (as depicted in FIG. 6) that identifies one or more segments from the individual arrangement tracks that have repetitive patterns and duration longer than a threshold of 15 seconds. This threshold is not hard-coded and can be re-configured. The computing process for the generation of the segments can be understood from FIG.6. The Intelligent Workflow (IW) presents the segments back to the artist to filter or modify them by editing their corresponding features for the final loop generation. At present, this feature is tested for arrangement tracks such as drums and bass guitar. However, such exemplary testing shall not be construed as limiting the scope of the present disclosure. Once the artist selects the segments and is satisfied with the corresponding features, the Intelligent Workflow (IW) invokes underlying AI tools to generate the final loops through multiple iterations of prompt generation and AI tool invocation. The artists have the option to playback the loops for feedback. If the artists are satisfied with the generated loops, they can upload them into one or more loop sequencers/ a loop sequencing software/ Digital Audio Workstation (DAW) such as Loopy Pro, Ableton, etc. for their live performances.

The method of the present disclosure is used for music performances, in practice sessions as well as in a live performance with about fifteen people in the audience. The method of the present disclosure holds promise as well as challenges as pointed out in the observations in the preceding sections.

Preparing a perfect set-list for a live performance is time consuming and intricate. It was observed that off-the-shelf AI tools have significant potential for curating set-lists and sequencing tracks based on their themes. Hence the Intelligent Workflow (IW) can help artists in their performance preparations through set-list creation, track sequencing, and track captioning for introductions.

Remixing tracks to generate loops complimenting a live music performance is a tedious process that requires significant knowledge of music in the current practice. An IW can integrate available AI tools to enhance the productivity of the individual tasks in the process by assisting with useful automation. AI tools can help generate crisp prompts that help to systematically map user inputs into features of the desired music such as genre, mood, key, Beats Per Minute (BPM), etc. Available AI tools have the potential to reduce manual work towards loop creation but with challenges.

Some of the limitations of the existing AI tools for music generation are listed in the below sections.

The datasets used by most AI tools have limited feature tags that mostly cater to mood, genre, and specific instruments. Some tags are too abstract for users to appropriately specify the fine-grained musical features for specific music loop generations. Hence, artists are constrained by the feature tags that the existing tools provide. In some cases, the tags are copyrighted. Some AI tools do not have API or JSON-based interfaces and only have web-based interfaces. This makes it difficult to integrate into an IW. Web-based tools may also be limited by the restriction on the number of specified features.

Some AI tools have issues generating music accurately according to specified features like Beats per minute (BPM). The workaround requires tool-specific parameter tuning to ensure quality and style coherence, e.g., tuning of Top-k, Top-p (nucleus sampling), and temperature parameters of the MusicGen tool (known in art). Iterative testing and refinement cycles are essential to fine-tune parameters and enhance the model's ability to generate high-quality loops.

Another challenge is to ensure that the generated prompt passed as input to an underlying AI tool like MusicGen has an optimal length so that the model captures and retains the intended musical context. The present method overcomes the above challenge using the capability description of the AI tool which specifies the length to conform to the AI tool's capability.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

Preparing for live music performances such as curating and sequencing a list of tracks and remixing them with musical loops can be challenging. The embodiments of present disclosure address these issues by demonstrating an approach that uses off-the-shelf AI tools integrated into an Intelligent Workflow (IW) that can help musicians execute well-defined tasks to not only create performance set-lists but also generate complimenting music loops to augment their musical performances. The embodiment also highlights challenges in the available toolset towards implementing the IW.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein.

## Claims

1. A processor implemented method (300), comprising:
receiving (302), via one or more hardware processors, one or more inputs from a user specific to an event;
predicting (304), via the one or more hardware processors, a first set of features relevant to the event using one or more machine learning techniques, wherein the first set of features comprise a plurality of personas pertaining to the user;
generating (306), via the one or more hardware processors, using at least a subset of the predicted first set of features, one or more music tracks matching the predicted first set of features;
performing (308), via the one or more hardware processors, based on the generated one or more music tracks:
(i) splitting the one or more music tracks into one or more individual arrangement tracks using an Artificial Intelligence (AI) tool;
(ii) identifying one or more repetitive patterns for each of the one or more individual arrangement tracks;
(iii) generating one or more segments using the identified one or more repetitive patterns for each of the one or more individual arrangement tracks, based on a comparison of time length of the identified one or more repetitive patterns and a predefined threshold time; and
(iv) extracting a second set of features from each of the generated one or more segments;
generating (310), via the one or more hardware processors, one or more loops based on at least a subset of the extracted second set of features for each of the generated one or more segments; and
providing (312), via the one or more hardware processors, the generated one or more loops for one or more loop sequencers for usage in the event.

2. The processor implemented method as claimed in claim 1, wherein the one or more inputs comprise at least one of a location of the event and an occasion of the event.

3. The processor implemented method as claimed in claim 1, wherein the first set of features comprise at least one of one or more age groups, a cultural background, a dress code, and an expected energy level at the event.

4. The processor implemented method as claimed in claim 1, wherein the one or more individual arrangement tracks comprise at least one of one or more individual instrument tracks and one or more individual vocal tracks.

5. The processor implemented method as claimed in claim 1, wherein the second set of features comprise one or more tags of a JavaScript Object Notation (json) file.

6. A system (100), comprising:
a memory (104) storing instructions;
one or more communication interfaces (112); and
one or more hardware processors (102) coupled to the memory (104) via the one or more communication interfaces (112), wherein the one or more hardware processors (102) are configured by the instructions to:
receive one or more inputs from a user specific to an event;
predict a first set of features relevant to the event using one or more machine learning techniques, wherein the first set of features comprise a plurality of personas pertaining to the user;
generate using at least a subset of the predicted first set of features, one or more music tracks matching the predicted first set of features;
perform at least one of the following based on the generated one or more music tracks:
(i) splitting the one or more music tracks into one or more individual arrangement tracks using an AI (Artificial Intelligence) tool;
(ii) identifying one or more repetitive patterns for each of the one or more individual arrangement tracks;
(iii) generating segments using the identified one or more repetitive patterns for each of the one or more individual arrangement tracks, based on a comparison of time length of the identified one or more repetitive patterns and a predefined threshold time; and
(iv) extracting a second set of features from each of the generated one or more segments;
generate one or more loops based on at least a subset of the extracted second set of features for each of the generated one or more segments; and
provide the generated one or more loops for one or more loop sequencers for usage in the event.

7. The system as claimed in claim 6, wherein the one or more inputs comprise at least one of a location of the event and an occasion of the event.

8. The system as claimed in claim 6, wherein the first set of features comprise at least one of one or more age groups, a cultural background, a dress code, and an expected energy level at the event.

9. The system as claimed in claim 6, wherein the one or more individual arrangement tracks comprise at least one of one or more individual instrument tracks and one or more individual vocal tracks.

10. The system as claimed in claim 6, wherein the second set of features comprise one or more tags of a JavaScript Object Notation (json) file.

11. One or more non-transitory machine-readable information storage mediums comprising one or more instructions which when executed by one or more hardware processors cause:
receiving one or more inputs from a user specific to an event;
predicting a first set of features relevant to the event using one or more machine learning techniques, wherein the first set of features comprise a plurality of personas pertaining to the user;
generating using at least a subset of the predicted first set of features, one or more music tracks matching the predicted first set of features;
performing based on the generated one or more music tracks:
(i) splitting the one or more music tracks into one or more individual arrangement tracks using an Artificial Intelligence (AI) tool;
(ii) identifying one or more repetitive patterns for each of the one or more individual arrangement tracks;
(iii) generating one or more segments using the identified one or more repetitive patterns for each of the one or more individual arrangement tracks, based on a comparison of time length of the identified one or more repetitive patterns and a predefined threshold time; and
(iv) extracting a second set of features from each of the generated one or more segments;
generating one or more loops based on at least a subset of the extracted second set of features for each of the generated one or more segments; and
providing the generated one or more loops for one or more loop sequencers for usage in the event.

12. The one or more non-transitory machine readable information storage mediums as claimed in claim 11, wherein the one or more inputs comprise at least one of a location of the event and an occasion of the event.

13. The one or more non-transitory machine readable information storage mediums as claimed in claim 11, wherein the first set of features comprise at least one of one or more age groups, a cultural background, a dress code, and an expected energy level at the event.

14. The one or more non-transitory machine readable information storage mediums as claimed in claim 11, wherein the one or more individual arrangement tracks comprise at least one of one or more individual instrument tracks and one or more individual vocal tracks.

15. The one or more non-transitory machine readable information storage mediums as claimed in claim 11, wherein the second set of features comprise one or more tags of a JavaScript Object Notation (json) file.
